# EUROPEAN PATENT APPLICATION

(11) **EP 1 787 794 A1**
(43) Date of publication of application: **23.05.2007**
(21) Application number: 06124430.7
(22) Date of filing: 21.11.2006
(51) Int. Cl.: B32B 1/08, F16L 9/12, F16L 11/08

(54) **Fibre-reinforced plastic tube**

(30) Priority: 21.11.2005 NL 1030476
(71) Applicant: Pipelife Nederland B.V., 1601 MA Enkhuizen (NL)
(72) Inventor: Dalmolen, Lambertus Gerrit Peter, 1019 SE, Amsterdam (NL); Cloos, Peter Jeroen, 1602 HZ, Enkhuizen (NL)
(74) Representative: van Westenbrugge, Andries

(57) **Abstract**

A fibre-reinforced plastic tube comprises an inner tube, at least one reinforcing layer arranged helically around the inner tube and an outer coating layer on the reinforcing layer, which reinforcing layer comprises an array of fibres extending next to one another as well as a support by means of which the fibres are connected to one another. The stability of the support in the direction transverse to the array of fibres is smaller than the shearing stability of the support.

## Description

The invention relates to a fibre-reinforced plastic tube, comprising an inner tube, at least one reinforcing tape arranged helically around the inner tube, which reinforcing tape comprises an array of fibres extending next to one another as well as a support by means of which the fibres are connected to one another.

Fibre-reinforced plastic tubes of this type are known. In particular, such fibre-reinforced plastic tubes may be suitable for high pressures, such as for example 100 bar. The main concern in this case is whether such fibre-reinforced plastic tubes are able to withstand such high pressures in the long term as well. Due to these high demands, aramid is often used as a fibre. Although aramid is a relatively expensive raw material, it nevertheless makes sense from an economic point of view to produce plastic tubes which are able to withstand high pressures from such a material. In most cases, two reinforcing layers are used, which are wound at opposite pitch angles.

However, aramid is less suitable as a fibre raw material in the case of tubes which are suitable for less high pressures, for example 50 bar. The technical properties, such as strength and rigidity, of aramid fibres are on such a high level that the possibilities offered by such a material are not used to their fullest extent when they are used in said tubes. In addition, aramid is a relatively expensive material. In this connection, polyester would be a much more suitable material for fibres which are used in such fibre-reinforced plastic tubes for less high pressures. The tensile strength of polyester fibres is approximately half the tensile strength of aramid fibres. This means that, with the same number of fibres of identical thickness, polyester fibres are suitable for plastic tubes with a maximum pressure of 50 bar.

Furthermore, plastic tubes are known which are made of what is referred to as polyethylene tape. With these plastic tubes, two layers of polyethylene tape are wound around a mandrel. One layer of polyethylene tape is wound anti-clockwise and the other layer is wound clockwise. Once both layers of polyethylene tape have thus been wound, they are melted onto an inner tube, for example by means of heating through infrared radiation. Upon heating, the polyethylene material of the inner and outer polyethylene tape will also fuse together. Finally, a protective polyethylene layer is applied to the exterior by means of extrusion.

Thus, a fibre-reinforced plastic tube is produced, the various layers of which are fused together to form a coherent entity. The advantage of plastic tubes of this type is that it is relatively easy to produce connections to join the pieces of plastic tube to one another. The coupling means used in this case can simply engage with the outer, protective polyethylene layer as the various layers forming the structure of the plastic tube are firmly connected to one another as a result of fusing. It is thus impossible for the layers which are situated further inside to move under load relative to the protective polyethylene layer, on which the coupling means engage.

A drawback of the abovementioned method of producing a fibre-reinforced plastic tube is that the costs thereof are relatively high. First of all, it is relatively time-consuming to fuse the various layers together in a reliable manner. The heat supplied to the exterior by means of infrared heating has to penetrate as far as the innermost layer, which, due to the maximum temperature which can be applied to the protective polyethylene layer, results in a considerable limitation in the production speed.

For this reason, a method is preferred which does not require the various layers of the fibre-reinforced plastic tube to be bonded to one another. Such plastic tubes where the layers are not bonded to one another require the use of a different type of coupling means, which ensures that the various layers of the plastic tube are clamped to one another in order to prevent displacement thereof through friction of the surfaces facing each other. However, such coupling means, which also have a clamping effect on the layers of the plastic tube, also have disadvantages. First of all, these coupling means are relatively complicated and consequently expensive. Furthermore, these coupling means comprise an element which is, of necessity, situated in the free passage of the plastic tubes. However, this internal element limits the passage and therefore limits the capacity of the plastic tubes.

It is known to use the abovementioned method with the layers of polyethylene tape mentioned above, but it is also known to use layers in this connection which contain a relatively small number of aramid fibres. In combination with the coupling means by means of which the layers are pressed together, it is then also possible to provide a plastic tube which is suitable for less high pressures. Nevertheless, the costs of aramid compared to, for example, polyester are so high (by a factor of 10) that even with the use of a relatively small number of aramid fibres, the costs of such plastic tubes would still be high compared to plastic tubes using polyester fibres.

For these reasons, it is attractive to provide plastic tubes for medium-high pressures which are reinforced with polyester fibres, and which consist of layers which are not bonded to one another and which cooperate with each other through friction. However, meeting these specifications in practice has proved not to be so easy. Tests have shown that such plastic tubes are subject to damage mechanisms which differ significantly from those which occur with plastic tubes which have been reinforced using aramid, or which have been made from polyethylene tapes. In particular, it was found that such plastic tubes which have been reinforced with polyester fibres already fail before the maximum mechanical load-bearing capacity of the polyester fibre is reached. This adverse phenomenon is connected with the relatively high elongation at break of polyester material compared to aramid. Polyester material has an elongation at break of several tens of percents, while the elongation at break of aramid is around three per cent.

It is exactly this high elongation at break which causes the premature failure of plastic tubes which have been reinforced using polyester fibre layers which have not been attached to one another. When the pressure in the plastic tube increases, the polyester fibres expand in the winding direction. This expansion of the polyester fibres results in the space between the fibres becoming larger. However, this phenomenon is concentrated between the adjoining windings of the reinforcing layer. If these spaces between the windings have exceeded a certain value, the inner tube is no longer supported to a sufficient degree by the polyester-reinforced reinforcing layers. If the spaces become large, the inner tube may eventually be pushed outwards. The inner tube then breaks, while the polyester fibres are still intact. This problem does not occur in the case of plastic tubes which have been reinforced using polyester fibres and in which the layers are bonded to one another. This bonding prevents an excessive increase in the space between the fibres, and in particular between the windings, so that the inner tube remains completely supported and the plastic tube does not break until the polyester fibres themselves break.

It is therefore an object of the invention to provide a fibre-reinforced plastic tube which is reinforced with wound reinforcing tapes made of fibres, such as polyester fibres, and which does not require the tape to be fused to yhe inner tube, while it is still possible to maintain a maximum pressure of 50 bar over a relatively long period in such a plastic tube. This object is achieved according to the invention in that the stability of the reinforcing tape in the direction transverse to the array of fibres is smaller than the stability of the reinforcing tape in the longitudinal direction of the array of fibres. Stability is in this case understood to mean the degree of expansion or flexibility in the respective direction, and/or the susceptibility to crack-formation under load in this direction. Another description of the susceptibility to crack-formation relates to the linear stress at break or elongation at break.

The fibre-reinforced plastic tube according to the invention has several advantages. First of all, this plastic tube can be produced in the conventional manner by winding one or more reinforcing tapes around a mandrel. This is made possible in particular by the fact that these reinforcing tapes have an acceptable shearing stability, and can therefore be handled in the usual manner. That is to say that the reinforcing tapes can be unwound from a roll, and can then be wound onto the mandrel in a stable manner.

Due to the fact that the stability of the reinforcing tape in the transverse direction is relatively limited, it is possible for it to yield in a uniform manner when the plastic tube expands on account of the overpressure. That is to say that the width of the reinforcing tapes can easily increase due to the limited stability in the transverse direction thereof. This has the advantageous result that the distance between all of the individual plastic fibres and pairs of plastic fibres roughly increases by the same degree, such that relatively large distances between two fibres are avoided locally. As the elongation is now distributed evenly and is no longer concentrated in the areas between the windings, it is no longer possible for large openings to be formed. It is true that when the tube expands, slightly larger openings do occur between the fibres, but these openings are so small that the inner tube can be supported in the correct and reliable manner. The risk of the plastic tube breaking as a result of the inner tube being pushed outwards is thus prevented.

The reinforcing tapes may be constructed in various ways. According to a first option, they are ony assembled from longitudinal fibres in combination with, and kept together by, the support, This support can be a polymer film, for instance in the form of a hotmelt adhesive. Such a support can be relatively thin, for instance in the order of a tenth of a millimeter. As an alternative, or additionally, the support may comprise weft threads which are woven into the array of fibres. However, in order to achieve the desired degree of flexibility in the transverse direction, the number of weft threads has to be relatively small. Therefore, in particular the centre-to-centre distance of the weft threads is smaller than the centre-to-centre distance of the fibres. Furthermore, the stability of the weft threads may be even lower than the stability of the fibres. Also, the total weight of the weft threads per unit area of the reinforcing tape may be lower than the total weight of the fibres per unit area of the reinforcing tape. Thus, it is possible, for example, for the total weight of the weft threads per unit area of the reinforcing layer to be less than 50% of the total weight of the fibres per unit area of the reinforcing tape. Preferably, the total weight of the weft threads per unit area of the reinforcing tape is less than 10% of the total weight of the fibres per unit area of the reinforcing tape.

Although in the abovedescribed variant the support is formed by a polymeric film and/or weft threads, other supports are also possible. An example which may be mentioned is a support made from a sheet-like material. According to an advantageous variant, the fibres are accommodated between two supports made of sheet-like material. In particular the latter may, in this case, be a film sheet, preferably a self-adhesive film. The sheet-like material may consist of various materials, such as polypropylene, polyethylene, PVC, paper and the like.

Furthermore, the linear modulus of elasticity of the reinforcing tape in the direction transverse to the array of fibres is lower than the linear modulus of elasticity of the reinforcing tape in the direction of the fibres. In particular, the linear modulus of elasticity of the reinforcing tape in the direction transverse to the array of fibres may be less than 50% of the linear modulus of elasticity of the reinforcing tape in the direction of the fibres. An embodiment in which the linear modulus of elasticity of the reinforcing tape in the direction transverse to the array of fibres is less than 10% of the linear modulus of elasticity of the reinforcing tape in the direction of the fibres is preferred.

Below, the invention will be explained in more detail with reference to an embodiment which is illustrated in the figures.
Fig. 1 shows a perspective view of a prior art plastic tube in the unloaded state, in which the coating layer is indicated by broken lines for the sake of clarity;
Fig. 2 shows a perspective view of a prior art plastic tube from Fig. 1 in the loaded state;
Figs. 3a and 3b show cross sections through a reinforcing layer in a prior art plastic tube in the unloaded and in the loaded state, respectively;
Fig. 4 shows a perspective view of a plastic tube according to the invention;

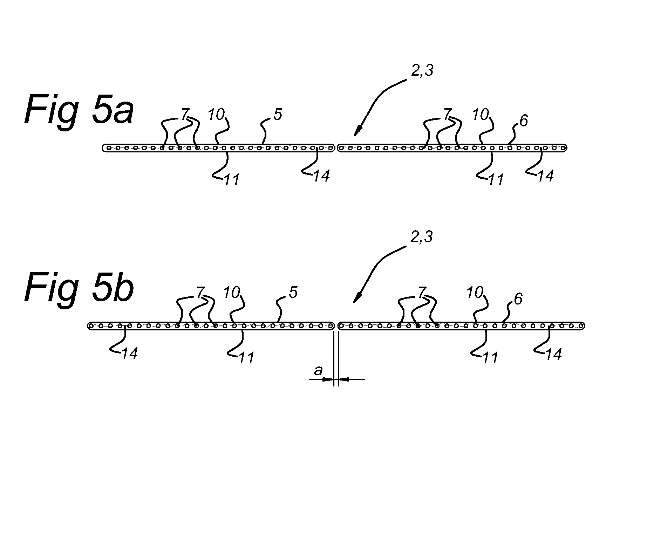

Figs. 5a and 5b show cross sections through a reinforcing layer in a plastic tube according to the invention in the loaded and unloaded state, respectively.

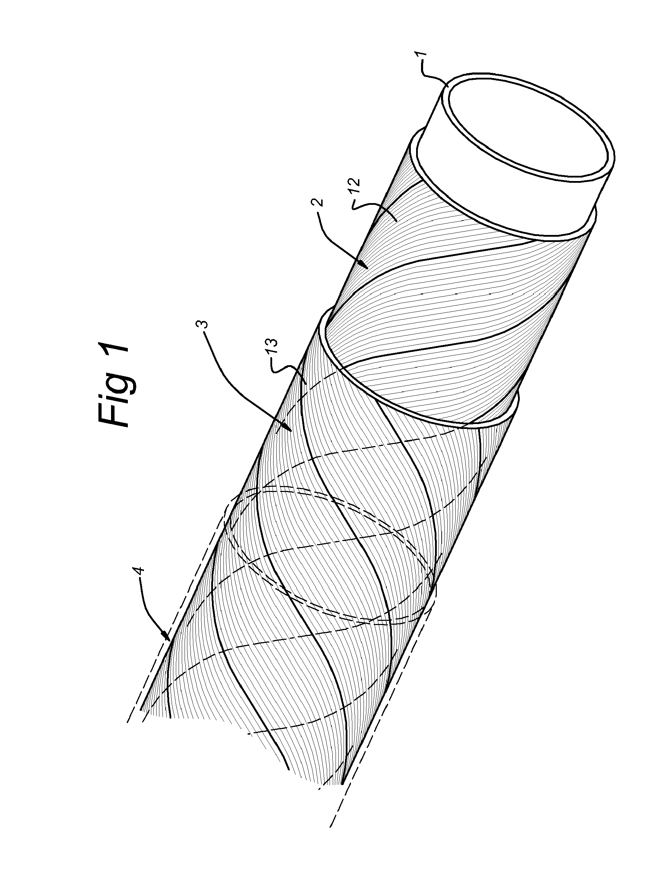

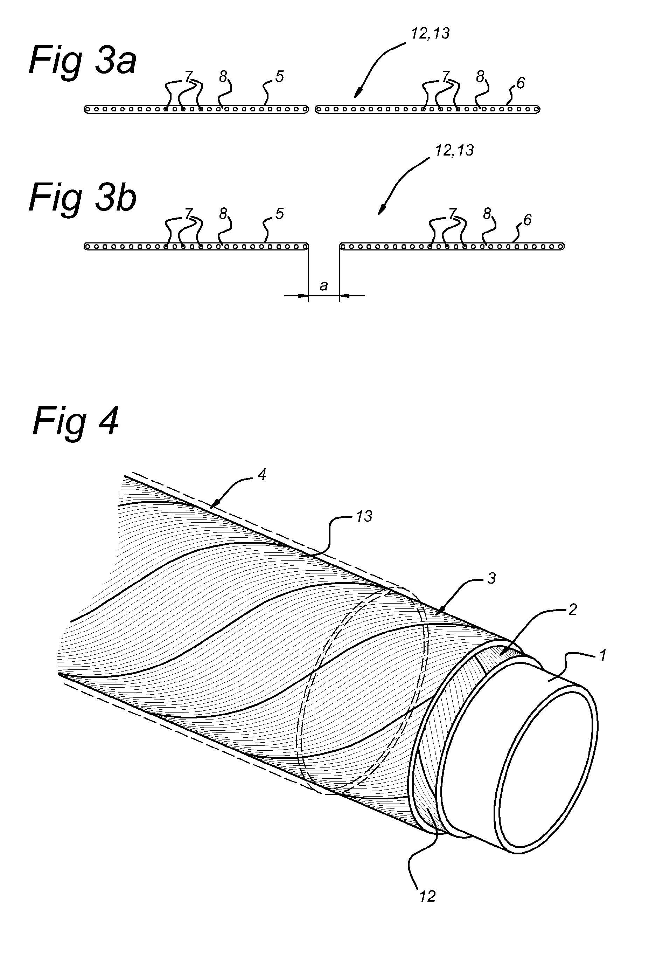

The plastic tube illustrated in Fig. 1 comprises an inner tube 1, two reinforcing layers 2, 3 each consisting of a reinforcement tape 12 resp. 13 and a coating layer 4 indicated by broken lines. One reinforcement tape 12 is helically wound around the inner tube 1 in one direction, while the other reinforcement tape 14 is helically wound over this one reinforcement tape 13 in the opposite direction. Fig. 3 shows two windings 5, 6 of the reinforcement tapes 12, 13 next to one another. As is also shown, the reinforcement tape 12, 13 consist of a number of parallel fibres 7, which are embedded in a matrix 8 of plastic material.

According to the prior art, these fibres 7 may be made of polyester, which, as is known, is less rigid and has considerable elongation at break. When the respective plastic tube according to the prior art is subjected to pressure, it expands, which manifests itself in the windings 5, 6 moving apart. In Fig. 3b, this is shown by the distance a which is thus formed between the lateral edges of the windings 5, 6 facing one another. As this distance a occurs in both the one coating layer 2 and the other coating layer 3, openings 9 result in the areas in which the spaces between the windings 5, 6 cross one another. At these openings 9, the inner tube 1 is not supported. As a result of the internal overpressure in the inner tube 1, the latter may bulge at these openings 9, in such a manner that the plastic tube breaks much sooner than elongation at break of the polyester fibres 7 would be reached.

The plastic tube according to the invention uses reinforcement tape 12, 13 which are constructed differently. These reinforcement tape 12, 13 also comprise fibres 7 made of, for example, polyester, which are bonded to a first layer of hotmelt adhesive or foil 10 and a second layer of hotmelt adhesive, foil 11 and the like in the embodiment illustrated. The fibres 7 are thus accommodated between these two layers 10, 11. It is also possible to apply only on ane side of the reinforcement tapes such a support or layer. For the films 10, 11, a material is selected which has sufficient shearing strength, but can have a considerable expansion in the direction transverse to the fibres 7. As a result of this relatively high shearing strength, the reinforcing layers 2, 3 can easily be wound around a mandrel. Furthermore, the weft threads 14 are shown, which in addition or by themselves, can function as a support. Because the mutual distance of the weft threads is much larger than the mutual distance of the fibres 7, the stability of the reinforcement tape in transverse direction is thus much smaller than the stability in longitudinal direction.

When the plastic tube according to the invention is subjected to overpressure, the polyester fibres 7 also expand. As the stability of the films 10, 11 in the direction transverse to the fibres 7 (or of the weft threads 14) is relatively low, the films 10, 11 will expand in this direction. This expansion of the films in the transverse direction leads to the distance between the fibres 7 increasing. In addition, the distance between the windings 5, 6 hardly increases as a result of the expansion, and in any case is much smaller than with the windings 5, 6 as illustrated in Fig. 3 of the plastic tube according to the prior art.

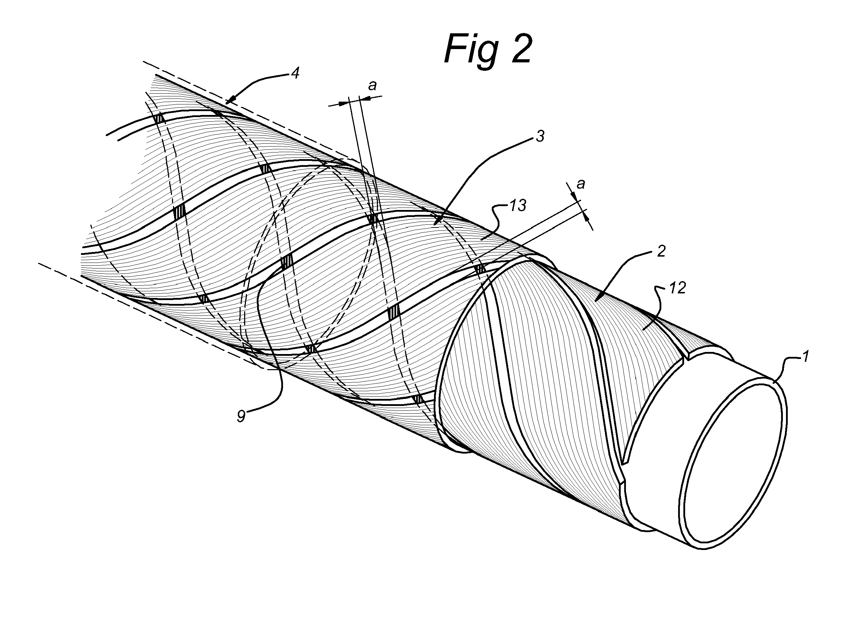

The positive result of these phenomena for the plastic tube according to the invention is that when the plastic tube is subjected to overpressure, few, if any, openings 9 are formed, contrary to the plastic tube according to the prior art (cf. Fig. 2).

The reinforcing tapes 12,13 can cooperate with each other in different ways. According to a first possibility, their facing surfaces can cooperate by friction. It is however also possible to mutually connect the reinforcing tapes by for instance glueing. In the case of the reinforcing tapes with a hotmelt adhesive as support, the hot melt adhesive supports can take care of the connection through melting.

## Claims

1. Fibre-reinforced plastic tube, comprising an inner tube (1), at least one reinforcing tape (12, 13) arranged helically around the inner tube (1), said reinforcing tape (12, 13) comprising an array of fibres (7) extending next to one another as well as a support (8, 10, 11, 14) by means of which the fibres (7) are connected to one another, **characterized in that** the stability of the reinforcing tape (12, 13) in the direction transverse to the array of fibres (7) is smaller than the stability of the reinforcing tape (12, 13) in the longitudinal direction of the array of fibres (7).

2. Plastic tube according to Claim 1, wherein the support (8, 10, 11) comprises a polymeric film.

3. Plastic tube according to Claim 1 or 2, wherein the support (8, 10, 11) comprises a hotmelt adhesive,

4. Plastic tube according to Claim 2 or 3, wherein the polymeric film has a thickness in the order of several tenths of a millimeter.

5. Plastic tube according to any of the preceding Claims, in which the fibres (7) comprise polyester material.

6. Plastic tube according to any of the preceding Claims, in which the support comprises weft threads (14) which are woven into the array of fibres (7).

7. Plastic tube according to Claim 6, in which the centre-to-centre distance of the weft threads (14) is greater than the centre-to-centre distance of the fibres.

8. Plastic tube according to Claim 6 or 7, in which the stability of the weft threads (14) is lower than the stability of the fibres (7).

9. Plastic tube according to one of Claims 6-8, in which the total weight of the weft threads (14) per unit area of the reinforcing tape (12, 13) is lower than the total weight of the fibres (7) per unit area of the reinforcing tape (12, 13).

10. Plastic tube according to Claim 9, in which the total weight of the weft threads (14) per unit area of the reinforcing tape (12, 13) is less than 50% of the total weight of the fibres (7) per unit area of the reinforcing tape (12, 13).

11. Plastic tube according to Claim 10, in which the total weight of the weft threads (14) per unit area of the reinforcing tape (12, 13) is less than 10% of the total weight of the fibres (7) per unit area of the reinforcing tape (12, 13).

12. Plastic tube according to one of the preceding claims, in which the support comprises a sheet-like material (10, 11).

13. Plastic tube according to Claim 12, in which the fibres (7) are accommodated between two films (10, 11) of sheet-like material.

14. Plastic tube according to Claim 12 or 13, in which the sheet-like material comprises a foil (10, 11).

15. Plastic tube according to Claim 14, in which the foil (10, 11) is self adhesive.

16. Plastic tube according to one of Claims 12-15, in which the sheet-like material (10, 11) comprises polypropylene.

17. Plastic tube according to one of Claims 12-15, in which the sheet-like material (10, 11) comprises polyethylene.

18. Plastic tube according to one of Claims 12-15, in which the sheet-like material (10, 11) comprises PVC.

19. Plastic tube according to one of Claims 12-18, in which the sheet-like material (10, 11) comprises paper.

20. Plastic tube according to one of Claims 12-19, in which the linear modulus of elasticity of the reinforcing tape (12, 13) in the direction transverse to the array of fibres (7) is lower than the linear modulus of elasticity of the reinforcing tape (12, 13) in the direction of the fibres (7).

21. Plastic tube according to Claim 20, in which the linear modulus of elasticity of the reinforcing tape (12, 13) in the direction transverse to the array of fibres (7) is less than 50% of the linear modulus of elasticity of the reinforcing tape (12, 13) in the direction of the fibres (7).

22. Plastic tube according to Claim 21, in which the linear modulus of elasticity of the reinforcing tape (12, 13) in the direction transverse to the array of fibres (7) is less than 10% of the linear modulus of elasticity of the reinforcing tape (12, 13) in the direction of the fibres (7).

23. Plastic tube according to any of the preceding claims, in which the reinforcing tape (12, 13) which adjoins the inner tube cooperates with the inner tube (1) by mutual friction.

24. Plastic tube according to any of the preceding claims, in which at least two reinforcing tapes (12, 13) are provided and one (13) of the reinforcing tapes extends helically around the other reinforcing tape (12).

25. Plastic tube according to claim 24, in which the pitch angle of adjoining plastic tapes (12, 13) is opposite.

26. Plastic tube according to claim 24 or 25, in which the plastic tapes (12, 13) cooperate with each other by mutual friction.

27. Plastic tube according to claim 24 or 25, in which the plastic tapes (12, 13) are connected to each other, such as by melting or glueing.

28. Plastic tube according to one of the preceding claims, in which the windings (5, 6) of the plastic tape (12, 13) are lying next to each other.

29. Plastic tube according to claim 28, in which the edges facing each other of the windings (5, 6) touch each other or are at a distance from each other.

30. Plastic tube according to one of the preceding claims, in which an external coating layer (4) is provided around the outer reinforcing tape (12, 13).
